(19)

**Europäisches Patentamt**

**European Patent Office**

**Office européen des brevets**

(11) **EP 0 997 807 A2**

(12) **EUROPÄISCHE PATENTANMELDUNG**

(43) Veröffentlichungstag:
**03.05.2000 Patentblatt 2000/18**

(51) Int. Cl.⁷: **G06F 1/00**, B61L 19/00

(21) Anmeldenummer: **99250361.5**

(22) Anmeldetag: **12.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.10.1998 DE 19851709**

(71) Anmelder:
**SIEMENS AKTIENGESELLSCHAFT**
**80333 München (DE)**

(72) Erfinder: **Braband, Jens, Dr.**
**38106 Braunschweig (DE)**

(54) **Verfahren zum Online-Update sicherheitskritischer Software in der Eisenbahn-Signaltechnik**

(57) Die vorliegende Erfindung beschreibt ein Verfahren zum Online-Update sicherheitskritischer Software in der Eisenbahn-Signaltechnik und dient insbesondere dem Einbringen von Produktsoftware in Zielrechner von Anlagen. Das erfindungsgemäße Verfahren basiert darauf, daß jeder Teilnehmer einen öffentlichen und einen geheimen Schlüssel erhält, von den Teilnehmern eine Zertifizierungsinstanz zur Beglaubigung der Zugehörigkeit der Schlüssel zu den Teilnehmern mit einem Zertifikat bestimmt wird, jeder Teilnehmer sein eigenes Schlüsselzertifikat und das Zertifikat der Zertifizierungsinstanz erhält, jeder an der Erstellung und Prüfung der Produktsoftware beteiligte Teilnehmer die Produktsoftware und die bisherigen Unterschriften mit seinem geheimen Schlüssel unterschreibt und gemeinsam mit seinem eigenen Schlüsselzertifikat weiterleitet, die Zertifizierungsinstanz für jeden Anwendungsfall eine Prüferliste erzeugt und signiert und die Produktsoftware zusammen mit einer verketteten Unterschriftenliste und der Liste der Schlüsselzertifikate der Teilnehmer sowie der Prüferliste in den Zielrechner eingebracht und endgeprüft wird.

Fig.1

EP 0 997 807 A2

**Beschreibung**

Die vorliegende Erfindung betrifft ein Verfahren zum Online-Update sicherheitskritischer Software in der Eisenbahn-Signaltechnik und dient insbesondere dem Einbringen von Produktsoftware in Zielrechner von Anlagen.

Neue Echtzeit-Betriebssysteme bieten weitreichende Debugging- oder Software-Upgrade-Optionen, während das eigentliche System läuft (sog. running target), um eine hohe Verfügbarkeit zu garantieren (sog. non-stop realtime systems). Im Prinzip sind diese Wartungsarbeiten auch online, z. B. über das Internet oder ähnliche offene Nezwerke möglich, ohne daß ein Techniker vor Ort ist. Dies ist vor allem in hochgradig verteilten Systemen ein enormer Vorteil.

Diese Vorteile moderner Echtzeit-Betriebssysteme und Computer-Netze sind bislang für sicherheitskritische Anwendungen in der Eisenbahn-Signaltechnik nicht nutzbar, da nicht garantiert werden kann, daß die eingebrachte Produkt-Software authentisch ist, d. h. von dem behaupteten Absender stammt und nicht manipuliert wurde und die Produkt-Software nach den geltenden Vorschriften geprüft ist.

Unter dem Oberbegriff Produktsoftware wird hier sowohl Systemsoftware als auch Anwendersoftware oder Anlagen-Projektierungsdaten verstanden.

Bekannt ist, die Produkt-Software nach Vorliegen (manuell unterschriebener) Prüfberichte über vorab in der Fertigung programmierte Speicherbaugruppen von Hand in das sicherheitskritische System einzubringen. Dieser Prozeß soll mittels der beschriebenen Erfindung digitalisiert werden, d. h. die Produkt-Software wird von den Prüfern digital signiert und über ein offenes Netz in das sicherheitskritische System eingebracht. Der Zielrechner prüft die Signaturen automatisch auf Echtheit und Zulässigkeit.

Weiterhin sind aus der EP 0 816 970 A2 ein Verfahren und eine Vorrichtung bekannt, mit welchen die Authentizität von Firmware geprüft werden kann. Es wird geprüft, ob spezifische Signaturen zu Mikrokodierungen passen. Nachteilig bei dieser Lösung ist, daß der öffentliche Schlüssel in der Anlage fest installiert ist und keine Überprüfung der Prüfberechtigungen erfolgt.

Um die Authentizität bei Übertragung von Daten über offene Netze zu gewährleisten, ist seit längerem die Verwendung von kryptographischen Methoden bekannt. Hierbei ist sowohl eine symmetrische als auch eine asymmetrische Verschlüsselung möglich.

Bei der asymmetrischen Verschlüsselung existiert im Gegensatz zur symmetrischen Verschlüsselung nicht nur ein einzelner Schlüssel, der allen Partnern bekannt ist, sondern ein Schlüsselpaar. Dieses Schlüsselpaar besteht aus einem sogenannten öffentlichen und einem privaten Schlüssel, wobei der öffentliche Schlüssel für jedermann zugänglich sein muß.

Der Erfindung liegt die Aufgabe zugrunde, ein Verfahren zum Online-Update sicherheitskritischer Software in der Eisenbahn-Signaltechnik zu schaffen, welches mit einfachen Mitteln ein effektives Zusammenwirken mehrerer Teilnehmer bei der Erarbeitung und Prüfung von Produktsoftware sowie ein sicheres Einbringen dieser Produktsoftware in die Zielrechner auch über ungesicherte Kommunikationskanäle ermöglicht.

Diese Aufgabe wird erfindungsgemäß gelöst durch die Merkmale im kennzeichnenden Teil des Anspruches 1 im Zusammenwirken mit den Merkmalen im Oberbegriff. Zweckmäßige Ausgestaltungen der Erfindung sind in den Unteransprüchen enthalten.

Ein besonderer Vorteil der Erfindung besteht darin, daß eine sichere Erarbeitung, Übertragung und Einspeisung der Produktsoftware in einen Zielrechner unter Mitwirkung mehrerer Teilnehmer ermöglicht wird, indem jeder Teilnehmer einen öffentlichen und einen geheimen Schlüssel erhält, von den Teilnehmern eine Zertifizierungsinstanz zur Beglaubigung der Zugehörigkeit der Schlüssel zu den Teilnehmern mit einem Zertifikat bestimmt wird, jeder Teilnehmer sein eigenes Schlüsselzertifikat und das Zertifikat der Zertifizierungsinstanz erhält, jeder an der Erstellung und Prüfung der Produktsoftware beteiligte Teilnehmer die Produktsoftware und die bisher geleisteten Unterschriften mit seinem geheimem Schlüssel unterschreibt und gemeinsam mit seinem eigenen Schlüsselzertifikat weiterleitet, die Zertifizierungsinstanz für jeden Anwendungsfall eine Prüferliste erzeugt und signiert und die Produktsoftware zusammen mit einer verketteten Unterschriftenliste und der Liste der Schlüsselzertifikate der Teilnehmer sowie der Prüferliste in den Zielrechner eingebracht und endgeprüft wird.

Ein weiterer Vorteil der Erfindung besteht darin, daß die Produktsoftware auch über ungesicherte Kommunikationskanäle übertragen werden kann.

Gemäß der vorliegenden Erfindung werden asymmetrische Verschlüsselungsverfahren verwendet. Jeder Teilnehmer x verfügt über zwei Schlüssel, nämlich einen öffentlichen Schlüssel $P_X$ und einen geheimen Schlüssel $S_X$. Der geheime Schlüssel ist durch geeignete organisatorische Maßnahmen (zum Beispiel Passwort, Speicherung auf Chipkarte etc.) vor Mißbrauch gesichert.

Öffentliche Schlüssel sind in der Regel jedem Teilnehmer zugänglich, auf einen geheimen Schlüssel darf nur ein Teilnehmer Zugriff haben. Mit seinem geheimen Schlüssel kann der Teilnehmer Datensätze digital unterschreiben (Operation $Sig_X$) oder mit seinem öffentlichen Schlüssel verschlüsselte Datensätze entschlüsseln (Operation $Dec_X$). Jeder Teilnehmer, der im Besitz des zugehörigen öffentlichen Schlüssels ist, kann von x signierte, für ihn bestimmte Datensätze verifizieren (Operation $Ver_X$) oder x verschlüsselte Nachrichten senden (Operation $Enc_X$). Das genaue asymmetrische Verfahren ist dabei egal, im Prinzip kann jedes aus dem Stand der Technik bekannte Verfahren verwendet werden,

Die Erfindung soll nachstehend anhand von zumindest teilweise in den Figuren dargestellten Ausführungsbeispielen näher erläutert werden.

Es zeigen:

Fig. 1    eine schematische Darstellung des Zusammenwirkens von Teilnehmern mit einer Zulassungsbehörde;

Fig. 2    einen Programmablaufplan für die Prüfung der Produktsoftware

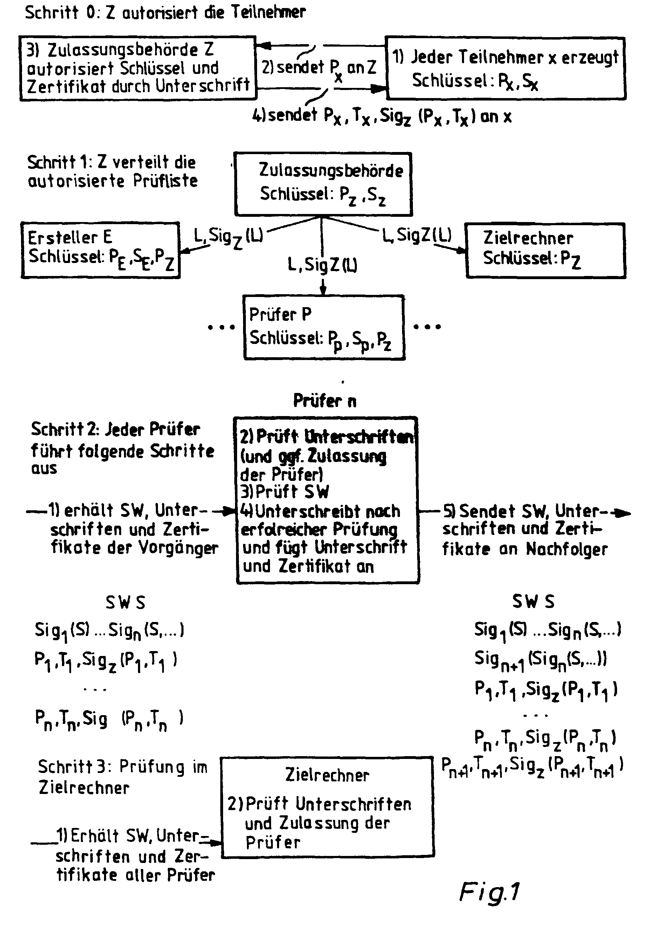

Wie in Figur 1 dargestellt, wird unter den Teilnehmern ein besonders vertrauenswürdiger Teilnehmer Z, die sogenannte Zertifizierungsinstanz, bestimmt. Als Zertifizierungsinstanz wird im vorliegenden Ausführungsbeispiel eine Zulassungsbehörde eingesetzt, in Deutschland für die Eisenbahn-Signaltechnik z.B. das Eisenbahnbundesamt, oder eine andere vertrauenswürdige Instanz. Dieser Teilnehmer zertifiziert, d. h. beglaubigt, daß die Schlüssel der einzelnen Teilnehmer wirklich zu den behaupteten Teilnehmern gehören. Dazu unterschreibt Z digital für jeden Teilnehmer x dessen öffentlichen Schlüssel $P_X$ sowie ein Textfeld $T_X$, das Angaben zur Identität des Teilnehmers, zur Gültigkeitsdauer des Zertifikats etc. enthält. Das Zertifikat besteht also für jeden Teilnehmer aus $P_X$, $T_X$ sowie $Sig_Z(P_X, T_X)$. Die Zertifizierungsinstanz übergibt zusätzlich jedem Teilnehmer ihr eigenes Zertifikat, das aus $P_Z$, $T_Z$ sowie $Sig_Z(P_Z, T_Z)$ besteht.

Im weiteren wird nun ein konkreter Anwendungsfall betrachtet.

Die Zulassungsbehörde Z erzeugt für jeden Anwendungsfall eine Prüferliste L, in der vermerkt ist, welche Prüfer welche Produktsoftware und in welcher Prüfer-Zusammensetzung prüfen dürfen. Diese Liste wird ebenfalls von der Zulassungsbehörde signiert und zusammen mit dem Zertifikat $Sig_Z(L)$ auf gesichertem Weg in den Zielrechner der Anlage eingebracht, also entweder zusammen mit der Produktsoftware oder als Projektierungsdatum. Zusätzlich sollte die Prüferliste auch an die beteiligten Prüfer verteilt werden. Alternativ kann sie auch zusammen mit der Produkt-Software übertragen werden.

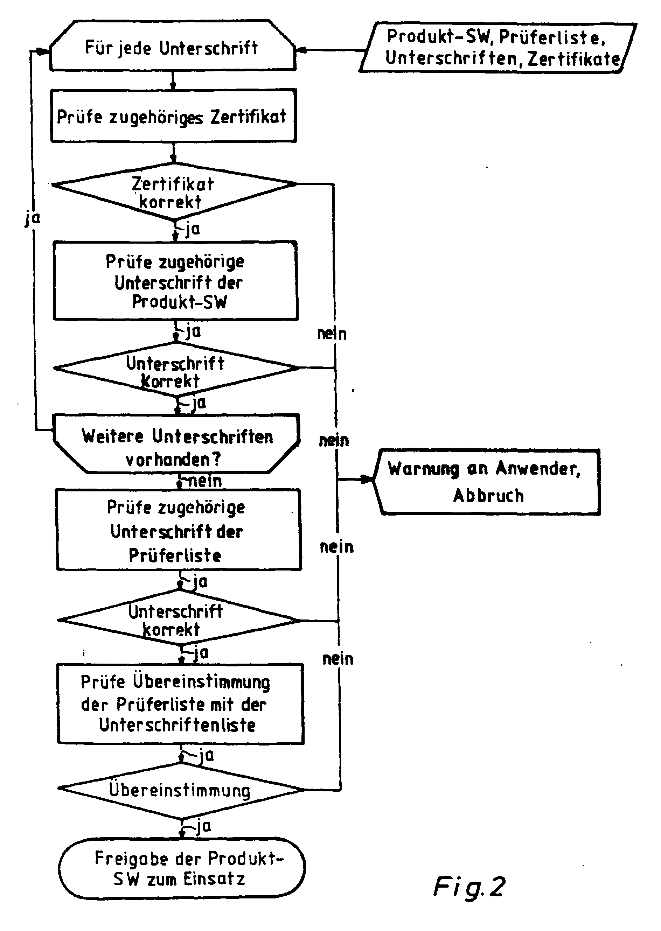

Jeder an der Erstellung und Prüfung der Produktsoftware beteiligte Teilnehmer unterschreibt die Produktsoftware S und die bisher geleisteten Unterschriften seiner Vorgänger in der Prüfhierarchie, d.h. der Ersteller E unterschreibt die Produktsoftware S mit $Sig_E(S)$, und sendet sie mit der Unterschrift und seinem Schlüsselzertifikat $P_E$, $T_E$ sowie $Sig_Z(P_E, T_E)$ an den Prüfer P, der die Echtheit der Unterschrift prüft und nach positivem Prüfergebnis die Produktsoftware S und die letzte Unterschrift $Sig_E(S)$ mit $Sig_P(S, Sig_E(S))$ unterschreibt und mit seinem Schlüsselzertifikat $P_P$, $T_P$ sowie $Sig_Z(P_P, T_P)$ sowie dem Schlüsselzertifikat von E weiterleitet. Die Echtheit der Unterschriften wird durch jeden Prüfer nach dem in Figur 2 angegebenen Schema geprüft.

Dieses Prinzip kann sich noch einige Male wiederholen wie in Figur 2 dargestellt, je nachdem wieviele Teilnehmer, d. h. Gutachter, Tester etc. beteiligt sind. Am Ende liegt die Produktsoftware S zusammen mit einer verketteten Unterschriftenliste und der Liste der Schlüsselzertifikate der Teilnehmer vor. Dies wird zusammen mit der Prüferliste in den Zielrechner übertragen.

Beispiel: Prüfplan  L=(A, B, C, D, ... K)

| Produkt-SW S | $Sig_A(S)$ | $Sig_B(S, Sig_A(S))$ | .... $Sig_K(S, Sig_J(S, Sig_I(S,...)))$ |
|---|---|---|---|

In jedem sicheren Rechner der Anlage (Zielrechner) muß neben einer Implementation der kryptographischen Funktionen der öffentliche Schlüssel der Zulassungsbehörde verfügbar sein. Bei Empfang eines neuen Softwarestandes prüft der sichere Rechner die digitalen Unterschriften der Prüfer, die zu diesem Softwarestand gehören, sowie bei erfolgreicher Prüfung die Berechtigung der Prüfer anhand der Prüferliste.

Falls die Produktsoftware über ungesicherte Kommunikationskanäle übertragen werden soll oder verhindert werden soll, daß unbefugte Dritte Kenntnis der Produktsoftware erlangen, so muß die Produktsoftware zusätzlich verschlüsselt werden, und zwar jeweils mit dem öffentlichen Schlüssel des Kommunikationspartners.

Beispiel:

Sendet E an P, so wird statt der Produktsoftware S die verschlüsselte Fassung $Enc_P(S)$ gesendet. P entschlüsselt diese mit seinem privaten Schlüssel und verschlüsselt sie mit dem öffentlichen Schlüssel des nächsten Kommunikationspartners. In diesem Fall ist es auch notwendig, jedem Zielrechner ein Schlüsselpaar zuzuweisen, da im letzten Schritt mit dem öffentlichen Schlüssel des Zielrechners zu verschlüsseln ist.

Weiterhin sind organisatorische Maßnahmen notwendig, um sicherzustellen, daß die geheimen Schlüssel der Prüfer bzw. Zertifizierungsinstanz nicht unberechtigt eingesetzt werden können (entweder mit Paßwort verschlüsselte Speicherung auf PC oder Chipkarte) und daß Software nicht auf anderem Wege, d. h. unter Umgehung der skizzierten Sicherheitsmaßnahmen auf den Zielrechner gebracht werden kann (Firewall-Funktionalität).

**Patentansprüche**

1. Verfahren zum Online-Update sicherheitskritischer Software in der Eisenbahn-Signaltechnik unter Mitwirkung mehrerer Teilnehmer und unter Nutzung kryptographischer Methoden und in digitalisierter Form vorliegender verschlüsselter Datensätze, wobei

   - jeder Teilnehmer einen öffentlichen und einen geheimen Schlüssel erhält,
   - von den Teilnehmern eine Zertifizierungsinstanz zur Beglaubigung der Zugehörigkeit der Schlüssel zu den Teilnehmern mit einem Zertifikat bestimmt wird,
   - jeder Teilnehmer sein eigenes Schlüsselzertifikat und das Zertifikat der Zertifizierungsinstanz erhält,
   - jeder an der Erstellung und Prüfung der Produktsoftware beteiligte Teilnehmer die Produktsoftware und die bisherigen Unterschriften mit seinem geheimen Schlüssel unterschreibt und gemeinsam mit seinem eigenen Schlüsselzertifikat weiterleitet,
   - die Zertifizierungsinstanz für jeden Anwendungsfall eine Prüferliste erzeugt und signiert und
   - die Produktsoftware zusammen mit einer verketteten Unterschriftenliste und der Liste der Schlüsselzertifikate der Teilnehmer sowie der Prüferliste in den Zielrechner eingebracht und endgeprüft wird.

2. Verfahren nach Anspruch 1,
   **dadurch gekennzeichnet**
   daß die geheimen Schlüssel der Teilnehmer zum digitalen Unterschreiben von Datensätzen und bei Übertragung der Produktsoftware über ungesicherte Kommunikationskanäle zum Entschlüsseln verwendet werden.

3. Verfahren nach Anspruch 1,
   **dadurch gekennzeichnet**
   daß die öffentlichen Schlüssel der Teilnehmer zum Entschlüsseln verschlüsselter Datensätze oder zum Verifizieren signierter Datensätze und bei Übertragung der Produktsoftware über ungesicherte Kommunikationskanäle zum Verschlüsseln mit dem öffentlichen Schlüssel des nächsten Kommunikationspartners verwendet werden.

4. Verfahren nach Anspruch 1,
   **dadurch gekennzeichnet**
   daß die Zertifizierungsinstanz zur Erstellung der Zertifikate für jeden Teilnehmer dessen öffentlichen Schlüssel sowie ein Textfeld mit Angaben zur Identität und Gültigkeitsdauer des Zertifikates unterschreibt.

5. Verfahren nach Anspruch 1,
   **dadurch gekennzeichnet**
   daß in der Prüferliste vermerkt ist, welcher Teilnehmer welche Produktsoftware und in welcher Zusammensetzung mit anderen Teilnehmern prüfen darf.

6. Verfahren nach Anspruch 1,
   **dadurch gekennzeichnet**
   daß im Zielrechner neben einer Implementation der kryptographischen Funktionen der öffentliche Schlüssel der Zertifizierungsinstanz verfügbar ist.

7. Verfahren nach Anspruch 1,
   **dadurch gekennzeichnet**
   daß der Zielrechner bei der Endprüfung die digitalen Unterschriften der Teilnehmer sowie die Berechtigung der Teilnehmer anhand der Prüferliste prüft.

8. Verfahren nach einem der Ansprüche 1 bis 3,
   **dadurch gekennzeichnet**

daß bei Übertragung der Produktsoftware über ungesicherte Kommunikationswege jedem Zielrechner ein Schlüsselpaar zugewiesen wird.

Schritt 0: Z autorisiert die Teilnehmer

3) Zulassungsbehörde Z autorisiert Schlüssel und Zertifikat durch Unterschrift

2) sendet $P_x$ an Z

1) Jeder Teilnehmer x erzeugt Schlüssel: $P_x, S_x$

4) sendet $P_x, T_x, Sig_z(P_x, T_x)$ an x

Schritt 1: Z verteilt die autorisierte Prüfliste

Zulassungsbehörde Schlüssel: $P_z, S_z$

Ersteller E Schlüssel: $P_E, S_E, P_z$

$L, Sig_z(L)$

$L, SigZ(L)$

Zielrechner Schlüssel: $P_z$

$L, SigZ(L)$

... Prüfer P Schlüssel: $P_p, S_p, P_z$ ...

Prüfer n

Schritt 2: Jeder Prüfer führt folgende Schritte aus

—1) erhält SW, Unterschriften und Zertifikate der Vorgänger →

2) Prüft Unterschriften (und ggf. Zulassung der Prüfer)
3) Prüft SW
4) Unterschreibt nach erfolreicher Prüfung und fügt Unterschrift und Zertifikat an

—5) Sendet SW, Unterschriften und Zertifikate an Nachfolger →

SW S

$Sig_1(S) ... Sig_n(S, ...)$

$P_1, T_1, Sig_z(P_1, T_1)$

. . .

$P_n, T_n, Sig(P_n, T_n)$

SW S

$Sig_1(S) ... Sig_n(S, ...)$

$Sig_{n+1}(Sig_n(S, ...))$

$P_1, T_1, Sig_z(P_1, T_1)$

. . .

$P_n, T_n, Sig_z(P_n, T_n)$

$P_{n+1}, T_{n+1}, Sig_z(P_{n+1}, T_{n+1})$

Schritt 3: Prüfung im Zielrechner

Zielrechner
2) Prüft Unterschriften und Zulassung der Prüfer

__1) Erhält SW, Unterschriften und Zertifikate aller Prüfer

Fig.1

*Fig.2*